(19) Europäisches Patentamt
European Patent Office
Office européen des brevets

(11) **EP 1 883 979 B1**

(12) **EUROPÄISCHE PATENTSCHRIFT**

(45) Veröffentlichungstag und Bekanntmachung des Hinweises auf die Patenterteilung:
**26.01.2011 Patentblatt 2011/04**

(21) Anmeldenummer: 06763278.6

(22) Anmeldetag: **24.05.2006**

(51) Int Cl.:
*H01L 41/09* (2006.01)     *H01L 41/04* (2006.01)

(86) Internationale Anmeldenummer:
**PCT/EP2006/062599**

(87) Internationale Veröffentlichungsnummer:
**WO 2006/125806 (30.11.2006 Gazette 2006/48)**

(54) **FESTKÖRPERAKTOR-ANTRIEBSVORRICHTUNG MIT EINER IN ROTATION VERSETZBAREN WELLE**

SOLID STATE ACTUATOR DRIVE DEVICE COMPRISING A ROTATIONALLY MOVEABLE SHAFT

SYSTEME D'ENTRAINEMENT A ACTIONNEURS A L'ETAT SOLIDE POURVU D'UN ARBRE POUVANT ETRE ANIME D'UN MOUVEMENT DE ROTATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **27.05.2005 DE 102005024317**

(43) Veröffentlichungstag der Anmeldung:
**06.02.2008 Patentblatt 2008/06**

(60) Teilanmeldung:
**08017025.1 / 2 009 712**

(73) Patentinhaber: **Noliac A/S**
**3490 Kvistgaard (DK)**

(72) Erfinder:
• **GOTTLIEB, Bernhard**
  **81739 München (DE)**

• **KAPPEL, Andreas**
  **85649 Brunnthal (DE)**
• **SCHWEBEL, Tim**
  **80337 München (DE)**
• **WALLENHAUER, Carsten**
  **01987 Schwarzheide (DE)**

(74) Vertreter: **Inspicos A/S**
**Kogle Allé 2**
**P.O. Box 45**
**2970 Hørsholm (DK)**

(56) Entgegenhaltungen:
**EP-A- 1 098 429     EP-A- 1 319 859**
**DE-A1- 4 435 996     US-A- 5 079 471**

EP 1 883 979 B1

**Beschreibung**

Die Erfindung bezieht sich auf eine Festkörperaktor-Antriebsvorrichtung mit den oberbegrifflichen Merkmalen des Patentanspruchs 1.

Eine Festkörperaktor-Antriebsvorrichtung ist z.B. in Art eines Piezo-Ring-Motors aus EP 1098429 A2 bekannt. Diese Festkörperaktor-Antriebsvorrichtung weist eine Welle mit einer Wellenachse, eine Antriebseinrichtung, welche Festkörperaktoren aufweist, zum Versetzen der Welle in eine Rotation um die Wellenachse und ein Lager mit einer Lagerwandung zum Lagern der Welle auf. Die Antriebseinrichtung ist im Wesentlichen ringförmig mit einer Durchgangsöffnung ausgebildet, wobei der Innendurchmesser der Durchgangsöffnung etwas größer als der Außendurchmesser der hindurchführenden Welle ausgebildet ist. Durch die in radialer Richtung auf die Antriebseinrichtung einwirkenden Festkörperaktoren wird die Antriebseinrichtung gegenüber der Welle in eine seitliche Hin- und Herbewegung versetzt, welche die an dem Innenumfang der Durchgangsöffnung anliegende Welle in die Rotation versetzt.

Allgemein bekannt ist eine Anordnung mit einem Antrieb für eine Welle, wobei die Anordnung zusätzlich Sensoren aufweist zum Erfassen einer Last, welche auf die Welle wirkt.

Allgemein bekannt ist, dass Piezokeramik als elektromechanischer Wandler in beiden Richtungen wirkt. Durch das Anlegen einer mechanischen Spannung bzw. Kraft, d.h. durch eine erzwungene Deformation einer Vielschichtkeramik, wird eine elektrische Ladung generiert, die bei hochohmigem Klemmenabschluss aufgrund der Kapazität der Vielschichtkeramik als Potentialdifferenz zwischen den Klemmen abgreifbar ist, was als "direkter piezoelektrischer Effekt" bezeichnet wird. Durch das Anlegen eines elektrischen Feldes, d.h. das Aufbringen von Ladung auf eine kapazitiv wirkende Vielschichtkeramik, wird eine mechanische Spannung aufgebaut bzw. eine Deformation erzeugt, was als "inverser piezoelektrischer Effekt" bezeichnet wird.

EP 1 319 859 A1 beschreibt eine Bremsvorrichtung mit einer Festkörperaktor-Antriebsvorrichtung. Die Festkörperaktor-Antriebsvorrichtung ist ausgestattet mit einer Welle mit einer Wellenachse, mit einer Antriebseinrichtung, welche Festkörperaktoren aufweist zum Versetzen der Welle in eine Wellenrotation um die Wellenachse und mit einer Steuereinrichtung zum Anlegen einer Ladung und/oder Spannung an die Festkörperaktoren. Außerdem wird ein Signal zu einer auf zumindest einen der als Sensor wirkenden Festkörperaktoren wirkenden mechanischen Last erfasst und bestimmt, um damit ein Drehmoment des piezoelektrischen Antriebs so zu steuern, dass ein.gewünschtes Bremsmoment erzeugt wird.

Davon ausgehend besteht die Aufgabe der Erfindung darin, eine verbesserte Anordnung mit einer Festkörperaktor-Antriebsvorrichtung bereitzustellen, welche eine einfache Lastdetektion ermöglicht. Insbesondere wird nach einer Methode zur Lastdetektion, d.h. nach einem leicht an einer Ring-Festkörperaktor-Antriebsvorrichtung abgreifbaren elektrischen Signal gesucht, das in einem eindeutigen, quantifizierbaren Zusammenhang mit einem an einer Motorwelle anliegenden Drehmoment steht.

Diese Aufgabe wird durch eine Festkörperaktor-Antriebsvorrichtung mit den Merkmalen des Patentanspruchs 1 bzw. ein Verfahren mit den Merkmalen des Patentanspruchs 11 gelöst. Vorteilhafte Ausgestaltungen sind Gegenstand von abhängigen Ansprüchen.

Die Aufgabe wird demgemäß gelöst durch eine Festkörperaktor-Antriebsvorrichtung mit einer Welle mit einer Wellenachse, mit einer Antriebseinrichtung, welche Festkörperaktoren aufweist, zum Versetzen der Welle in eine Wellenrotation um die Wellenachse und mit einer Steuereinrichtung zum Anlegen einer Ladung und/oder Spannung an die Festkörperaktoren, wobei die Steuereinrichtung mit einer Detektor-Schaltungsanordnung gekoppelt ist oder eine Detektor-Schaltungsanordnung aufweist zum Erfassen und zum Bereitstellen eines Signals zu einer auf zumindest zwei der als Sensor wirkenden Festkörperaktoren wirkenden mechanischen Last und/oder Temperatur. Die Detektor-Schaltungsanordnung verwendet dabei Spannungs-, Strom- oder Ladungswerte aus zumindest zwei Festkörperaktoren und gibt eine zu einer Kräftedifferenz an den Festkörperaktoren proportionale Potentialdifferenz aus.

Bevorzugt wird insbesondere eine Festkörperaktor-Antriebsvorrichtung, bei welcher die Detektor-Schaltungsanordnung zum Erfassen einer auf die Welle oder ein Gehäuse der Festkörperaktor-Antriebsvorrichtung wirkenden Last geschaltet ist.

Bevorzugt wird insbesondere eine Festkörperaktor-Antriebsvorrichtung, bei welcher die zumindest zwei Festkörperaktoren hinsichtlich deren Hauptwirkrichtung zueinander unter einem Winkel, insbesondere unter einem Winkel von ca. 90° ausgerichtet sind.

Bevorzugt wird insbesondere eine Festkörperaktor-Antriebsvorrichtung, bei welcher die zumindest zwei Festkörperaktoren hinsichtlich deren Hauptwirkrichtung zueinander parallel ausgerichtet sind.

Bevorzugt wird insbesondere eine Festkörperaktor-Antriebsvorrichtung, bei welcher die zumindest zwei Festkörperaktoren hinsichtlich deren Hauptwirkrichtung in einer Ebene quer, insbesondere senkrecht zur Wellenachse der Welle ausgerichtet sind.

Bevorzugt wird insbesondere eine Festkörperaktor-Antriebsvorrichtung, bei welcher die mechanische Last ein auf die Welle einwirkendes Drehmoment ist.

Bevorzugt wird insbesondere eine Festkörperaktor-Antriebsvorrichtung, bei welcher eine einwirkende Kraft F abhängig von einem auf die Welle wirkenden Drehmoment $M_w$ und einer Lage bzw. Distanz d der Festkörperaktoren zueinander bestimmt wird, insbesondere näherungsweise bestimmt wird gemäß

$$F = \frac{M_W}{2} \cdot \frac{1}{2d}.$$

Bevorzugt wird insbesondere eine Festkörperaktor-Antriebsvorrichtung, bei welcher den Festkörperaktoren jeweils eine eigene Detektor-Schaltungsanordnung zugeordnet ist.

Bevorzugt wird insbesondere eine Festkörperaktor-Antriebsvorrichtung, welche als Ring-Festkörperaktor-Antriebsvorrichtung ausgebildet ist.

Bevorzugt wird insbesondere eine Festkörperaktor-Antriebsvorrichtung nach einem vorstehenden Anspruch, bei welcher die Steuereinrichtung oder die Detektor-Schaltungsanordnung ausgelegt und eingerichtet ist zum Erfassen und zum Bereitstellen des Signals auch bei ansonsten inaktiver Festkörperaktor-Antriebsvorrichtung. Dies ermöglicht z.B. im Ruhezustand eines Kraftfahrzeugs einen Einbruchschutz zum Auslösen eines Alarmsignals bei einem Versuch ein Fahrzeugfenster herunterzudrücken.

Bevorzugt wird insbesondere ein Verfahren zum Betreiben einer solchen Festkörperaktor-Antriebsvorrichtung mit einer Steuereinrichtung, bei dem mittels der Steuereinrichtung Ladungen und/oder Spannungen an die Festkörperaktoren angelegt werden und mit zumindest einer Detektor-Schaltungsanordnung eine auf zumindest einen der als Sensor wirkenden Festkörperaktoren wirkende mechanische Last und/oder Temperatur erfasst wird. Dabei bestimmt die Detektor-Schaltungsanordnung und/oder die Steuereinrichtung eine Potenzialdifferenz aus durch die Detektor-Schaltungsanordnung erfassten Ladungen und/oder spannungen zumindest zweier der Festkörperaktoren und gibt ein entsprechendes Signal aus oder verwendet ein entsprechendes Signal für eine Steuerung oder Regelung der Festkörperaktor-Antriebsvorrichtung.

Bevorzugt wird insbesondere ein Verfahren, bei dem die Detektor-Schaltungsanordnung und/oder die Steuereinrichtung die wirkende mechanische Last und/oder Temperatur auch bei ansonsten inaktiver Festkörperaktor-Antriebsvorrichtung erfasst.

Bei der Festkörperaktor-Antriebsvorrichtung sind in einem Winkel von vorzugsweise ca. 90° am Umfang eines insbesondere ringförmigen Antriebskörpers als Festkörperaktoren Linearaktoren paarweise angeordnet. Die Festkörperaktoren sind vorzugsweise Piezoaktoren, die unter Druckvorspannung zwischen Endkappen in eine Rohrfeder eingeschweißt sind. Eine solche Festkörperaktor-Antriebsvorrichtung kann daher auch als Doppelpiezo-Ringmotor angesehen werden. Durch die bevorzugte Anordnung und Ansteuerung wird ein Verfahren zur Lastdetektion für eine solche Festkörperaktor-Antriebsvorrichtung bereitgestellt. Ermöglicht wird ein an der Festkörperaktor-Antriebsvorrichtung selber leicht abgreifbares elektrisches Signal, das in einem eindeutigen, quantifizierbaren Zusammenhang mit einem an der Motorwelle anliegenden Drehmoment steht.

Alternativ können als Antriebselemente aber auch beliebige andere Festkörperaktoren eingesetzt werden, z. B. e-lektrostriktive oder magnetostriktive Aktoren.

Ein Ausführungsbeispiel wird nachfolgend anhand der Zeichnung näher erläutert. Es zeigen:

Fig. 1 eine Draufsicht auf eine Festkörperaktor- Antriebsvorrichtung mit einer Welle und mit einer Steuer- und Schaltungsanordnung zum Ansteuern der Festkörperaktor-Antriebsvorrichtung und zum Erfassen einer auf die Welle wirkenden Last,

Fig. 2 die Festkörperaktor-Antriebsvorrichtung gemäß Fig. 1 in einer Seitenansicht,

Fig. 3 eine Detektor-Schaltungsanordnung für die Festkörpe- raktor-Antriebsvorrichtung gemäß Fig. 1,

Fig. 4 eine detailliertere Detektor-Schaltungsanordnung für die Festkörperaktor-Antriebsvorrichtung gemäß Fig. 1,

Fig. 5 eine alternative Festkörperaktor-Antriebsvorrichtung in einer geschnittenen Draufsicht und

Fig. 6 ein Anwendungsbeispiel für eine Festkörperaktor- Antriebsvorrichtung mit einer solchen Steuer- und Schaltungsanordnung.

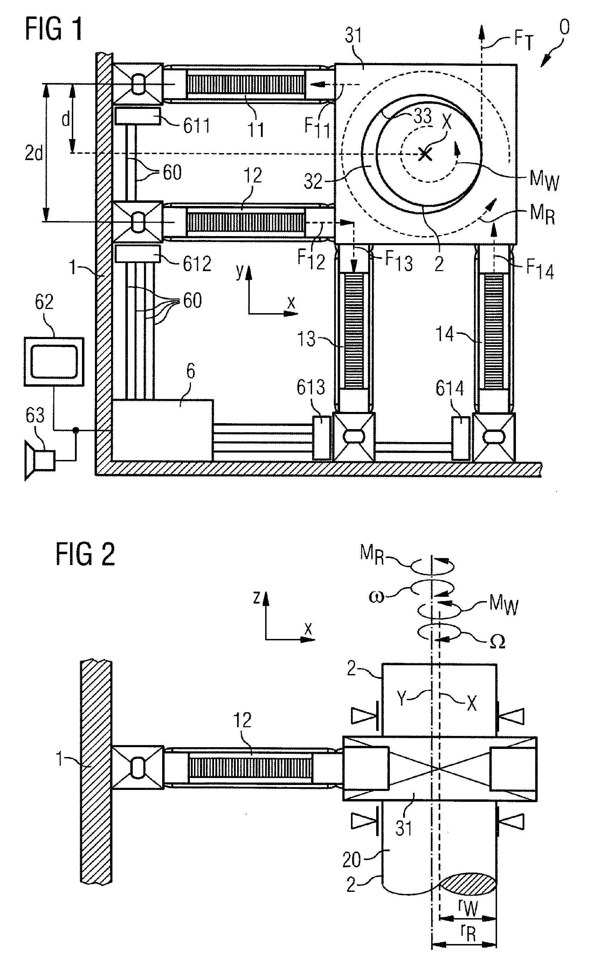

Wie dies aus Fig. 1 und 2 ersichtlich ist, besteht eine beispielhafte Festkörperaktor-Antriebsvorrichtung 0 aus einer Vielzahl von Einzelkomponenten, wobei die dargestellten Komponenten um weitere Komponenten ergänzbar sind bzw. gegen gleich wirkende Komponenten anderer Bauart austauschbar sind.

Die Festkörperaktor-Antriebsvorrichtung 0 weist ein Gehäuse 1 auf, welches die weitern Komponenten aufnimmt. In dem Gehäuse 1 ist mittels einer Lageranordnung eine Welle 2 gelagert, wobei sich eine Wellenachse X der Welle 2 in axialer Richtung z aus dem Gehäuse 1 heraus erstreckt. Zum Versetzen der Welle 2 um die Wellenachse X in eine Wellenrotation Ω dient eine Antriebsvorrichtung. Die Antriebsvorrichtung besteht im Wesentlichen aus vorzugsweise zwei oder mehr Festkörperaktoren 11 - 14 und einem Antriebskörper 31, welcher über die Festkörperaktoren 11 - 14 mechanisch steif mit einer Innenwandung des Gehäuses 1 verbunden ist. Die Festkörperaktoren 11 - 14 sind dabei derart angeordnet, dass sie den Antriebskörper 31 relativ zu dem Gehäuse 1 in eine Translationsbewegung in einer Ebene x, y senkrecht zur axialen Richtung z versetzen. Die Translationsbewegung versetzt den Antriebskörper 31 dabei in eine Hin- und Herbewegung, welche einer scheinbaren Antriebskörperrotation ω um eine Antriebskörperachse Y entspricht. Die Antriebskörperachse Y verschiebt sich aus Sicht der Wellenachse X um die Wellenachse X. Der Antriebskörper 31 weist eine Öffnung 32 auf, welche insbesondere als Durchgangsöffnung ausgebildet ist. Durch die Öffnung 32 des Antriebskörpers 31 führt die Welle 2 hindurch, wobei der Außendurchmesser der Welle 2 geringer als der Innendurchmesser der Öffnung 32 des Antriebskörpers 31 ist. Der Antriebskörper 31 wird durch die Festkörperaktoren 11 - 14 derart verstellt, dass eine Wellen-Außenwandung 20 vorzugsweise durchgehend mit einer Antriebskörper-Innenwandung 33 in Reib- und Formschluss steht, so dass durch die Bewegung des Antriebskörpers 31 die Welle 2 in die Wellenrotation Ω versetzt wird.

Hinsichtlich der Ansteuerung sind der erste und der zweite der Festkörperaktoren 11, 12 in ihrer Wirkrichtung parallel zueinander in der Ebene x, y senkrecht zur Rotationsachse der Welle 2 angeordnet. Vorzugsweise sind die beiden Festkörperaktoren 11, 12 dabei gleich weit um einen Betrag d von einer parallel zwischen diesen verlaufenden Linie entfernt, welche die Rotationsachse X der Welle 2 schneidet. Der dritte und der vierte der Festkörperaktoren 13, 14 sind in entsprechender Art und Weise an dem Antriebskörper 31 angeordnet, jedoch um vorzugsweise 90° innerhalb der Ebene x, y zu dem ersten und dem zweiten Festkörperaktor 11, 12 versetzt.

Zum Ansteuern der Festkörperaktoren 11 - 14 dient eine Steuereinrichtung 6, welche über Leiter 60 die einzelnen Festkörperaktoren 11 - 14 mit Spannungen bzw. Ladungen ansteuert. Entsprechend der Spannungen bzw. Ladungen dehnen sich die Festkörperaktoren 11, 14 entsprechend aus bzw. ziehen sich gegebenenfalls zusammen. Außerdem dienen diese Leiter 60 oder zusätzliche Leiter dazu, von den Festkörperaktoren 11 - 14 in umgekehrter Richtung Signale, insbesondere Spannungen oder Ladungen zu der Steuereinrichtung 6 zu übertragen. Dies ermöglich die Ausnutzung der Doppelfunktionalität der Festkörperaktoren 11 - 14, um diese nicht nur als Aktoren sondern auch als Sensoren einzusetzen. Auf die Festkörperaktoren 11 - 14 einwirkende Kräfte verursachen in diesen eine Ladungsverschiebung bzw. Potenzialänderung, welche dem von der Steuereinrichtung 6 angelegten Spannungs- oder Ladungswert überlagert wird.

Mittels der Steuereinrichtung 6 mit integrierter oder vorgeschalteter Detektorschaltung kann dadurch der Betrieb der Festkörperaktor-Antriebsvorrichtung überwacht, geregelt und/oder gesteuert werden. Beispielsweise kann eine übermäßige Last detektiert werden, welche auf die Welle 2 einwirkt, so dass beispielsweise ein Blockierungszustand oder drohender Blockierungszustand erfasst werden kann. In einem solchen Fall kann wahlweise eine Warnfunktion durch Ansteuern einer Anzeigeeinrichtung 62 oder einer akustischen Ausgabeeinrichtung 63 und/oder eine entsprechende Ansteuerung der Festkörperaktoren 11 - 14 zur Behebung der Störung durch die Steuereinrichtung 6 veranlasst werden. Auch systembedingte Überbelastungen durch beispielsweise erhöhte Temperaturen, welche in den Festkörperaktoren 11 - 14 wirken, können durch die Steuereinrichtung 6 erkannt werden. Neben der Aktivierung von Funktionen mit direktem Bezug auf den Betrieb der Festkörperaktoren-Antriebsvorrichtung 0 können auch externe Funktionalitäten angesteuert werden. Optional können auch Teile der Funktionalitäten einer solchen Steuereinrichtung 6 in Detektor-Schaltungsanordnungen 611 - 614 ausgelagert werden, welche integrierter Bestandteil der Festkörperaktoren 11 - 14 sind oder mit diesen in Verbindung stehen.

Fig. 1 und 2 zeigen die Festkörperaktor-Antriebsvorrichtung 0 unter Last. Beispielhaft liegt an der Welle 2 ein Wellen-Drehmoment $M_W$ an, das entgegen dem Uhrzeigersinn gerichtet ist. Das an der Welle 2 angreifende Wellen-Drehmoment $M_W$ wird im Kontaktpunkt zwischen der Antriebskörper-Innenwandung 33 und der Welle 2 in Form einer tangential gerichteten Kraft $F_T$ auf die Antriebskörper-Innenwandung 33 übertragen und bewirkt dort ein Antriebskörper-Drehmoment $M_R$ bezüglich des Mittelpunktes des Antriebskörpers 31. Zwischen einem Wellenradius $r_W$ und einem Antriebskörper-Innenradius $r_R$ besteht der Zusammenhang

$$M_R = M_W \cdot \frac{r_R}{r_W}.$$

Bei beispielhaften Radien im Bereich von 5 mm bis 20 mm liegt eine Radiusdifferenz bei 10 pm - 20 $\mu$m. Da der Wellenradius $r_W$ und der Antriebskörper-Innenradius $r_R$ ungefähr gleich sind, d.h. $r_W \approx r_R$ gilt, werden die an der Welle angreifenden Drehmomente nahezu 1:1 auf den Antriebskörpers 31 übertragen, so dass das Wellen-Drehmoment $M_W$ etwa gleich dem Antriebskörper-Drehmoment $M_R$ ist, d.h. $M_R \approx M_W$ gilt. Das Antriebskörper-Drehmoment $M_R$ wird über den Antriebskörper 31 je nach Wirkrichtung auf alle oder einen Teil der Festkörperaktoren 11 - 14 übertragen und letztendlich von den Festkörperaktoren 11 - 14 auf das Gehäuse 1 übertragen.

Da jeder einzelne der Festkörperaktoren 11 - 14 vorzugsweise nur eine geringe Biege- und Schersteifigkeit aufweist, aber axial sehr steif ist, wird der weitaus größte Anteil des Drehmomentes $M_R$ in Form von Längskräften in die Piezokeramik als beispielhaftem Material der Festkörperaktoren 11 - 14 eingeleitet und auf das Gehäuse 1 übertragen. Bei einem Aufbau der Festkörperaktoren 11 - 14 mit einer Rohrfeder um den eigentlichen Aktor leistet eine solche Rohrfeder nur einen vernachlässigbar kleinen Beitrag bei einer typischen Federrate c = 2 N/$\mu$m. Der Hauptbeitrag zur Steifigkeit rührt dabei von der Piezokeramik mit einer typischen Steifigkeit c = 20 N/$\mu$m - 40 N/$\mu$m her.

Bei der dargestellten Konfiguration sind vier baugleiche Festkörperaktoren 11 - 14 hinsichtlich ihres Abstandes 2d symmetrisch zur x-Achse bzw. y-Achse der Ebene x, y am Antriebskörper 31 angeordnet, wobei sich die x-Achse und die y-Achse im Ringmittelpunkt schneiden. Aufgrund des z.B. entgegen dem Uhrzeigersinn wirkenden Wellen- bzw. Antriebskörper-Drehmomentes $M_W$ bzw. $M_R$ wird auf die erste Gruppe der Festkörperaktoren 11 und 13 eine zusätzliche Druckkraft $F_{11}$ bzw. $F_{13}$ ausgeübt und auf die zweite Gruppe der Festkörperaktoren 12 und 14 eine zusätzliche Zugkraft $F_{12}$ bzw. $F_{14}$ ausgeübt.

Ein solcher Festkörperaktor 11 - 14 ist in dem Maße in der Lage, eine Zugkraft zu übertragen, in welchem z.B. der Piezokeramik durch die Rohrfeder beim Aufbau eine Druckvorspannung eingeprägt wurde. Die Kräfte $F_{11}$ bis $F_{14}$ sind aus Symmetriegründen betragsmäßig gleich groß bzw. nahezu gleich groß und bilden zwei Kräftepaare mit Abstand 2d, die sich zum Drehmoment $M_R \approx M_W$ aufsummieren. Daher gilt näherungsweise :

$$F_{11} = F_{12} = F_{13} = F_{14} = F = \frac{M_W}{2} \cdot \frac{1}{2d}.$$

Bei einem typischen Drehmoment von z.B. 2 Nm und einem typischen Abstand von z.B. d = 10 mm ergibt sich eine Einzelkraft von F = 50 N.

Da z.B. eine Piezokeramik als elektromechanischer Wandler solcher Festkörperaktoren 11 - 14 in beiden Richtungen wirkt, wird sowohl durch das Anlegen eines elektrischen Feldes bzw. durch das Aufbringen von Ladung auf eine kapazitiv wirkende Vielschichtkeramik eine mechanische Spannung aufgebaut bzw. eine Deformation erzeugt, als auch durch das Anlegen einer mechanischen Spannung bzw. Kraft, d.h. durch eine erzwungene Deformation eine elektrische Ladung generiert, die bei hochohmigem Klemmenabschluss aufgrund der Kapazität der Vielschichtkeramik als Potentialdifferenz zwischen den Klemmen abgreifbar ist. Bei Kräften von einigen 10 N werden Spannungen im Voltbereich bzw. Ladungen im 100 mAs-Bereich generiert. Der Zusammenhang zwischen Ladung und Kraft bzw. Spannung und Kraft ist nahezu linear. Ladungen bzw. Spannungen dieser Größe sind mittels geeigneter elektronischer Schaltungen durch die Steuereinrichtung 6 elektronisch leicht auswertbar.

Besondere Vorteile bei der derart ausgebildeten Ring-Festkörperaktor-Antriebsvorrichtung gemäß Fig.1 ergeben sich, wenn jeder der Festkörperaktoren 11 - 14 mit einer eigenen elektronischen Treiberstufe betrieben wird. Dabei wird jedes Aktorpaar 11, 12 bzw. 13, 14 benachbarter der Festkörperaktoren 11 - 14 mit der gleichen Signalform, d.h. zeitlichem Verlauf der aufgeprägten Ladung beaufschlagt.

Nachfolgend betrachtet wird beispielhaft das erste Aktorpaar mit dem ersten Festkörperaktor 11 und dem zweiten Festkörperaktor 12. Am ersten Festkörperaktor 11 stellt sich zeitabhängig eine erste Klemmenspannung U1(t) ein und am zweiten Festkörperaktor 12 stellt sich eine zweite Klemmenspannung U2(t) ein. Beim Einwirken des Wellen- bzw. Antriebskörper-Drehmomentes $M_W$ bzw. $M_R$ auf die Welle 2 stellt sich eine zeitunabhängige Potentialdifferenz $\Delta U = U2(t) - U1(t)$ ein, die direkt proportional zum einwirkenden Wellen-Drehmoment $M_W$ ist. Eingesetzte Piezoaktoren als die Festkörperaktoren 11 - 14 zeigen bei einer Erhöhung der Druckspannung in der Keramik durch zusätzliche Druckkraft auf die Festkörperaktoren 11 - 14 eine Potentialanhebung der positiven Aktorklemme gegenüber der negativen Aktorklemme und umgekehrt bei einer Absenkung der Druckspannung in der Keramik eine Potentialabsenkung der positiven Aktorklemme gegenüber der negativen. Daher ist am Vorzeichen der sich einstellenden Potentialdifferenz die Wirkrichtung des an der Welle 2 angreifenden Drehmomentes $M_W$ erkennbar.

Die zur Anwendung kommende Differenzmessmethode zeichnet sich neben einer in der Zeitunabhängigkeit von der Potentialdifferenz $\Delta U$ deutlichen Nullpunktunterdrückung auch durch eine inhärente Korrektur unerwünschter Umwelteinflüsse, z.B. der Temperatur aus.

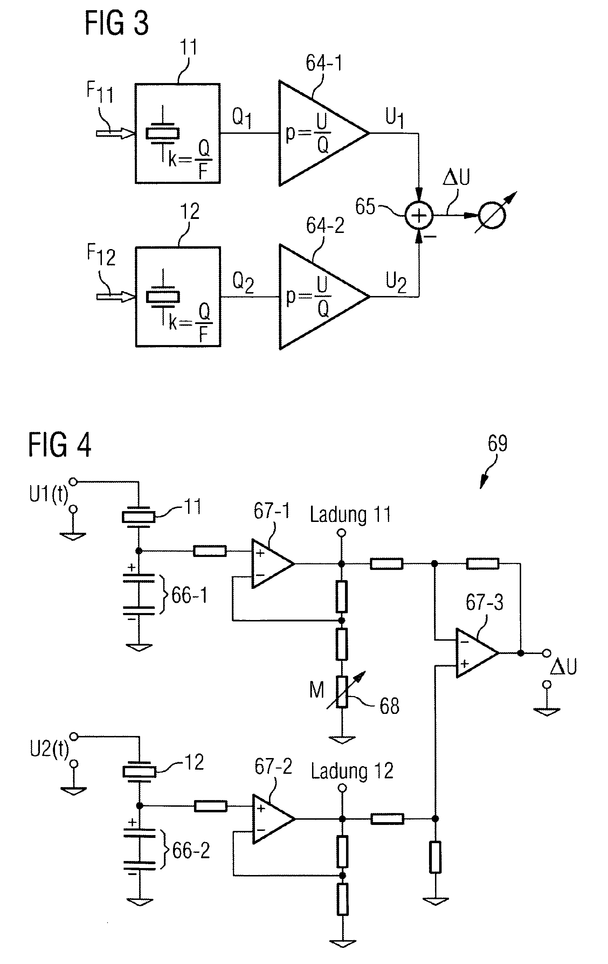

Fig.3 zeigt symbolisch eine Detektor-Schaltung zur Messung der Kräftedifferenz $F_{11}$ - $F_{12}$ und damit des Wellen-Drehmomentes $M_W$. Ausgabewert der Detektor-Schaltung ist die Spannungs- bzw. Potentialdifferenz $\Delta U$ oder im Allgemeinen eine beliebige elektrische Größe, die gemäß $\Delta U = p \cdot k(F_{11} - F_{12})$ berechnet wird.

Fig. 3 zeigt schematisch eine einfache Schaltungsanordnung mit zwei Piezoaktoren als dem ersten bzw. dem zweiten Festkörperaktor 11, 12. Symbolisiert werden die Festkörperaktoren durch eine kapazitive Größe mit der jeweiligen Kapazität k, welche von einer Ladungsanzahl Q und einer wirkenden Fläche F abhängt. Die beiden Festkörperaktoren 11, 12 geben entsprechend eine erste bzw. zweite Ladung Q1 bzw. Q2 aus, welche einem ersten bzw. einem zweiten Ladungsverstärker 64-1, 64-2 zugeführt werden. Die Ladungsverstärker 64-1, 64-2 führen in für sich bekannter Art und Weise eine Verstärkung durch und geben entsprechend einen ersten bzw. einen zweiten Spannungswert U1, U2 aus. Mittels dieser Spannungswerte U1, U2 wird in einem einfachen Subtrahierer 65 die Potenzialdifferenz $\Delta U$ gebildet, welche als ein entsprechendes Signal zur weiteren Auswertung hinsichtlich wirkender Lasten und/oder Temperaturen von der Steuereinrichtung 6 verwendet wird.

Eine bevorzugte Umsetzung der Detektor-Schaltung ist in Fig. 4 dargestellt. Die Detektor-Schaltung ermöglicht die Messung der Differenzladung der beiden Festkörperaktoren 11, 12. Die Umsetzung der in den Piezoaktoren generierten Ladung in eine proportionale Spannung erfolgt dabei in einer in Serie zum Aktor des Festkörperaktors 11, 12 geschalteten Kapazität von z.B. Kondensatoren 66-1, 66-2. Dies ist möglich, da der Festkörperaktor 11 im Betrieb in Abhängigkeit von der Treiberstufe des Festkörperaktors 11 auf eine vorgegebene Ladung oder Spannung geregelt wird und eine im Festkörperaktor 11 erzeugte, zusätzliche Ladung einen Stromfluss verursacht. Der Stromfluss generiert seinerseits eine gleich große Ladung gemäß der Kapazität der Kondensatoren 66-1, 66-2. Die in der Kapazität der Kondensatoren 66-1, 66-2 gespeicherte Ladung, führt zu einem nach $U = Q / C$ proportionalen Spannungsabfall am entsprechenden Element. Der Spannungsabfall an beiden entsprechenden Kanälen der Festkörperaktoren 11, 12 wird durch einen Eingangsverstärker 67-1 bzw. 67-2 mit möglichst hoher Eingangsimpedanz vorverstärkt und durch eine variable Stellmöglichkeit bzw. ein Stellelement 68 für einen Verstärkungsfaktor eine kanalabhängige unterschiedliche Empfindlichkeit ausgeglichen. In einer Ausgangsstufe 69 bestehend aus einem mit Widerständen beschalteten Verstärker 67-3 werden Ausgangsspannungen der Vorverstärker 67-1, 67-2 von einander subtrahiert, so dass eine zur Kräftedifferenz an den Festkörperaktoren 11, 12 und letztlich zum Drehmoment $M_W$, $M_R$ proportionale Ausgangsspannung entsprechend der Potentialdifferenz $\Delta U$ entsteht.

Die Auswertung der Spannungen an den Kondensatoren 66-1, 66-2 stellt nur einen Spezialfall zur Messung der generierten Ladung in den Festkörperaktoren 11, 12 dar. In Abhängigkeit von der verwendeten Treiberstufe für z.B. einen entsprechenden Piezoaktor, insbesondere spannungs- oder ladungsgeregelten Piezoaktor, sind andere Messverfahren anwendbar. So kann z.B. bei einer ladungsgeregelten Treiberstufe auch die Regelabweichung der Auswertung zugeführt werden.

Ebenso kann auch das zweite Aktorpaar mit den Festkörperaktoren 13, 14 alternativ oder zusätzlich eingesetzt werden. Es stehen dann prinzipbedingt zwei unabhängige Drehmomentsensoren zur Verfügung, wodurch eine hochpräzise Drehmomenterfassung ohne viel Aufwand darstellbar ist.

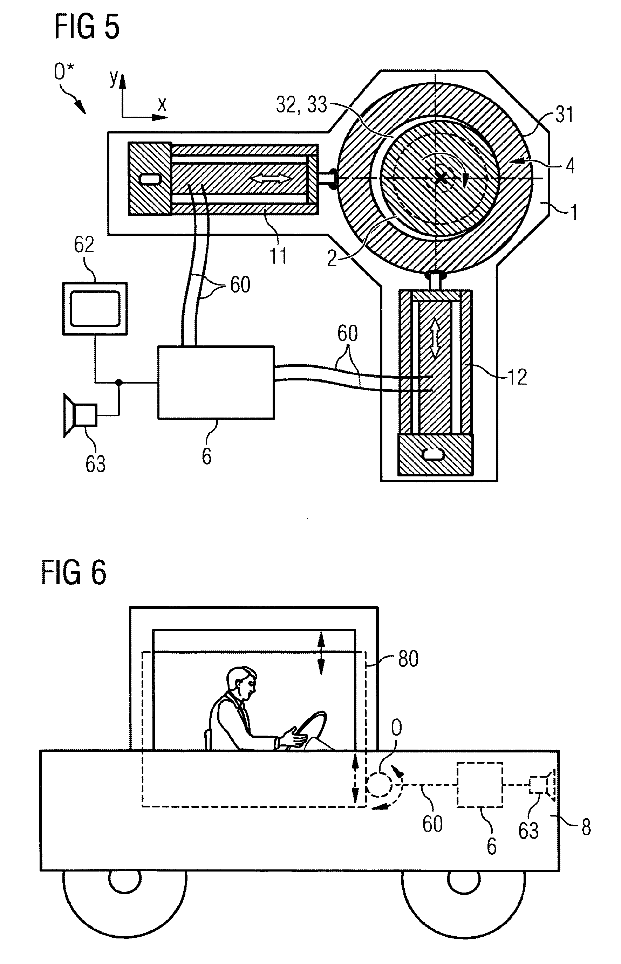

Fig. 5 zeigt eine alternative Ausführungsform, wobei nur Komponenten und Funktionen beschrieben werden, welche von denen der Ausführungsform gemäß Fig. 1 abweichen. Dargestellt ist eine besonders einfache Ausführungsform einer Ring-Festkörperaktor-Antriebsvorrichtung 0*, welche mit lediglich zwei Festkörperaktoren 11, 12 bestückt ist. Anstelle eines Paares aus je zwei Festkörperaktoren 11, 12 bzw. 13, 14 ist an dem Antriebskörper 31 in den beiden Richtungen x, y der Ebene senkrecht zur Rotationsachse X der Welle 2 jeweils nur ein einzelner Festkörperaktor 11, 12 angeordnet. Die von diesen beiden Festkörperaktoren 11, 12 detektierten Lasten, welche auf die Welle 2 und/oder das Gehäuse 1 der Festkörperaktor-Antriebsvorrichtung 0* einwirken, werden von der Steuereinrichtung 6 unter entsprechender Berücksichtigung des Ausrichtungswinkels der Festkörperaktoren 11, 12 ausgewertet.

Fig. 6 zeigt eine beispielhafte vorteilhafte Anwendung einer solchen Festkörperaktor-Antriebsvorrichtung in einem Kraftfahrzeug 8, bei welchem eine Fensterscheibe 80 durch die Festkörperaktor-Antriebsvorrichtung 0 hoch bzw. herunter verstellt wird. Die Steuereinrichtung 6 dient bei diesem einfachen Ausführungsbeispiel nicht nur zum Verstellen des Fensters 80 nach oben oder unten sondern zugleich zum Erfassen von nicht normalen Betriebszuständen. Falls beispielsweise beim Hochfahren des Fensters 80 ein Arm oder Finger einer Person zwischen der Oberkante des Fenster 80 und einem oberen Rahmen des Kraftfahrzeugs 8 eingeklemmt wird, so führt dies bereits vor dem Erreichen der oberen Endlage zu einer stark ansteigenden Last, welche auf die Festkörperaktoren einwirkt. Entsprechend kann durch die Steuereinrichtung 6 ein Stoppen der Antriebsbewegung der Festkörperaktor-Antriebsvorrichtung 0 oder ein Zurückfahren in Gegenrichtung veranlasst werden. Als weitere beispielhafte Anwendungsform kann die Steuereinrichtung 6 auch bei Stillstand des Kraftfahrzeugs 8 und abgeschalteter Kraftfahrzeug-Funktionalität zum Überwachen der Fenster 80 dienen. Ein Versuch, das Fenster 80 gewaltsam nach unten zu schieben, würde durch die Sensorwirkung der Festkörperaktoren erfasst werden, so dass die aktiv belassene Steuereinrichtung 6 ein Alarmsignal ausgeben kann, beispielsweise durch Aktivieren der Kraftfahrzeughupe als der akustischen Ausgabeeinrichtung 63.

## Patentansprüche

1. Festkörperaktor-Antriebsvorrichtung (0, 0*) mit

- einer Welle (2) mit einer Wellenachse (X),
- einer Antriebseinrichtung (11 - 14, 31 - 33), welche Festkörperaktoren (11 - 14) aufweist, zum Versetzen der Welle (2) in eine Wellenrotation ($\Omega$) um die Wellenachse (X) und
- einer Steuereinrichtung (6) zum Anlegen einer Ladung und/oder Spannung an die Festkörperaktoren (11 - 14),
- wobei die Steuereinrichtung (6) mit einer Detektor-Schaltungsanordnung gekoppelt ist oder eine Detektor-Schaltungsanordnung aufweist zum Erfassen und zum Bereitstellen eines Signals zu einer auf zumindest zwei der als Sensor wirkenden Festkörperaktoren wirkenden mechanischen Last und/oder Temperatur; **dadurch gekennzeichnet, dass**
- die Detektor-Schaltungsanordnung Spannungs-, Strom- oder Ladungswerte aus zumindest zwei Festkörperaktoren (11, 12) verwendet und
- wobei die Detektor-Schaltungsanordnung eine zu einer Kräftedifferenz an den Festkörperaktoren (11, 12) proportionale Potentialdifferenz ($\Delta U$) ausgibt.

2. Festkörperaktor-Antriebsvorrichtung nach Anspruch 1, bei welcher die Detektor-Schaltungsanordnung zum Erfassen einer auf die Welle (2) oder ein Gehäuse (1) der Festkörperaktor-Antriebsvorrichtung wirkenden Last geschaltet ist.

3. Festkörperaktor-Antriebsvorrichtung nach Anspruch 1 oder 2, bei welcher die zumindest zwei Festkörperaktoren (11, 12) hinsichtlich deren Hauptwirkrichtung zueinander unter einem Winkel, insbesondere unter einem Winkel von ca. 90° ausgerichtet sind.

4. Festkörperaktor-Antriebsvorrichtung nach Anspruch 1 oder 2, bei welcher die zumindest zwei Festkörperaktoren (11, 12) hinsichtlich deren Hauptwirkrichtung zueinander parallel ausgerichtet sind.

5. Festkörperaktor-Antriebsvorrichtung nach Anspruch 3 oder 4, bei welcher die zumindest zwei Festkörperaktoren (11, 12) hinsichtlich deren Hauptwirkrichtung in einer Ebene quer, insbesondere senkrecht zur Wellenachse (X) der Welle (2) ausgerichtet sind.

6. Festkörperaktor-Antriebsvorrichtung nach einem vorstehenden Anspruch, bei welcher die mechanische Last ein auf die Welle einwirkendes Drehmoment ($M_W$) ist.

7. Festkörperaktor-Antriebsvorrichtung nach einem vorstehenden Anspruch, bei welcher eine einwirkende Kraft (F) solcher Festkörperaktoren (11, 12) abhängig von einem auf die Welle (2) wirkenden Drehmoment ($M_W$) und einer Lage (d) der Festkörperaktoren (11, 12) zueinander bestimmt wird, insbesondere näherungsweise bestimmt wird gemäß

$$F = \frac{M_W}{2} \cdot \frac{1}{2d} ,$$

wobei einwirkende Kräfte ($F_{11}$, $F_{12}$) solcher Festkörperaktoren (11, 12) ein Kräftepaar mit Abstand (2d) bilden, die sich zum Drehmoment ($M_W$) aufsummieren.

8. Festkörperaktor-Antriebsvorrichtung nach einem vorstehenden Anspruch, bei welcher den Festkörperaktoren (11, 14) eine eigene Detektor-Schaltungsanordnung (611 - 614) direkt zugeordnet ist.

9. Festkörperaktor-Antriebsvorrichtung nach einem vorstehenden Anspruch, welche als Ring-Festkörperaktor-Antriebsvorrichtung (0, 0*) ausgebildet ist.

10. Festkörperaktor-Antriebsvorrichtung nach einem vorstehenden Anspruch, bei welcher die Steuereinrichtung (6) oder die Detektor-Schaltungsanordnung ausgelegt und eingerichtet ist zum Erfassen und zum Bereitstellen des Signals auch bei ansonsten inaktiver Festkörperaktor-Antriebsvorrichtung (0, 0*).

11. Verfahren zum Betreiben einer Festkörperaktor-Antriebsvorrichtung mit einer Steuereinrichtung nach einem vorstehenden Anspruch, bei dem

- mittels der Steuereinrichtung Ladungen und/oder Spannungen an die Festkörperaktoren (11 - 14) angelegt werden und
- mit zumindest einer Detektor-Schaltungsanordnung eine auf zumindest einen der als Sensor wirkenden Festkörperaktoren (11 - 14) wirkende mechanische Last und/oder Temperatur erfasst wird, **dadurch gekennzeichnet, dass** die Detektor-Schaltungsanordnung und/oder die Steuereinrichtung (6) eine Potenzialdifferenz ($\Delta U$) aus durch die Detektor-Schaltungsanordnung erfassten Ladungen und/oder Spannungen zumindest zweier der Festkörperaktoren (11 - 14) bestimmt und ein entsprechendes Signal ausgibt oder für eine Steuerung oder Regelung der Festkörperaktor-Antriebsvorrichtung verwendet.

12. Verfahren nach Anspruch 11, bei dem die Detektor-Schaltungsanordnung und/oder die Steuereinrichtung (6) die wirkende mechanische Last und/oder Temperatur auch bei ansonsten inaktiver Festkörperaktor-Antriebsvorrichtung (0, 0*) erfasst.

**Claims**

1. Solid-state actuator drive device (0, 0*) having

- a shaft (2) with a shaft axis (X),
- a drive device (11 - 14, 31 - 33) which has solid-state actuators (11 - 14) for setting the shaft (2) into a shaft rotation ($\Omega$) about the shaft axis (X) and
- a control device (6) for applying a charge and/or voltage to the solid-state actuators (11 - 14),
- wherein the control device (6) is coupled to a detector circuit arrangement or has a detector circuit arrangement for recording and for providing a signal to a mechanical load acting on at least two of the solid-state actuators acting as a sensor and/or temperature;
**characterised in that**
- the detector circuit arrangement uses voltage, current or charge values from at least two solid-state actuators (11, 12) and
- wherein the detector circuit arrangement outputs a potential difference ($\Delta U$) which is proportional to a force difference at the solid-state actuators (11, 12).

2. Solid-state actuator drive device according to claim 1, in which the detector circuit arrangement is connected for recording a load acting on the shaft (2) or a housing (1) of the solid-state actuator drive device.

3. Solid-state actuator drive device according to claim 1 or 2, in which the at least two solid-state actuators (11, 12) are aligned with respect to one another at an angle, in particular at an angle of about 90°, with regard to their main direction of action.

4. Solid-state actuator drive device according to claim 1 or 2, in which the at least two solid-state actuators (11, 12) are aligned to be parallel to one another with regard to their main direction of action.

5. Solid-state actuator drive device according to claim 3 or 4, in which the at least two solid-state actuators (11, 12) are aligned in a plane transversely, in particular vertically, to the shaft axis (X) of the shaft (2) with regard to their main direction of action.

6. Solid-state actuator drive device according to a preceding claim, in which the mechanical load is a torque ($M_W$) acting on the shaft.

7. Solid-state actuator drive device according to a preceding claim, in which an acting force (F) of such solid-state actuators (11, 12) is determined depending on a torque ($M_W$) acting on the shaft (2) and a position (d) of the solid-state actuators (11, 12) with respect to one another, in particular is determined approximately according to

$$F = \frac{M_W}{2} \cdot \frac{1}{2d} \, ,$$

wherein acting forces ($F_{11}$, $F_{12}$) of such solid-state actuators (11, 12) form a couple of forces with distance (2d) which add up to the torque ($M_W$).

8. Solid-state actuator drive device according to a preceding claim, in which a separate detector circuit arrangement (611 - 614) is assigned directly to the solid-state actuators (11, 14).

9. Solid-state actuator drive device according to a preceding claim, which is designed as a ring solid-state actuator drive device (0, 0*).

10. Solid-state actuator drive device according to a preceding claim, in which the control device (6) or the detector circuit arrangement is designed and equipped for recording and for providing the signal even in the case of an otherwise inactive solid-state actuator drive device (0, 0*).

11. Method for operating a solid-state actuator drive device having a control device according to a preceding claim, in which

- charges and/or voltages are applied to the solid-state actuators (11 - 14) by means of the control device and
- a mechanical load acting on at least one of the solid-state actuators (11 - 14) acting as a sensor and/or temperature is recorded by at least one detector circuit arrangement, **characterised in that** the detector circuit arrangement and/or the control device (6) determines a potential difference ($\Delta U$) from charges and/or voltages of at least two of the solid-state actuators (11 - 14) recorded by the detector circuit arrangement and outputs a corresponding signal or uses it for control or regulation of the solid-state actuator drive device.

12. Method according to claim 11, in which the detector circuit arrangement and/or the control device (6) records the acting mechanical load and/or temperature even in the case of an otherwise inactive solid-state actuator drive device (0, 0*).

**Revendications**

1. Dispositif d'entraînement à actionneur à corps solide (0, 0*) comprenant

- un arbre (2) avec un axe d'arbre (X),
- un dispositif d'entraînement (11 - 14, 31 - 33), lequel comporte des actionneurs à corps solide (11 - 14), pour amener l'arbre (2) dans une rotation de l'arbre ($\Omega$) autour de l'axe de l'arbre (X) et
- un dispositif de contrôle (6) pour appliquer une charge et/ou une tension sur les actionneurs à corps solide (11 - 14),
- le dispositif de contrôle (6) étant couplé à un agencement de circuit de détecteur ou comportant un agencement de circuit de détecteur pour détecter et pour mettre à disposition un signal pour une charge mécanique et/ou une température agissant sur au moins deux des actionneurs à corps solide à effet de capteur, **caractérisé en ce que**
- l'agencement de circuit de détecteur utilise des valeurs de tension, de courant ou de charge issues d'au moins deux actionneurs à corps solide (11, 12) et
- l'agencement de circuit de détecteur délivrant une différence de potentiel ($\Delta U$) proportionnelle à la différence de force sur les actionneurs à corps solide (11, 12).

**2.** Dispositif d'entraînement à actionneur à corps solide selon la revendication 1, dans lequel l'agencement de circuit de détecteur est connecté pour détecter une charge agissant sur l'arbre (2) ou sur un boîtier (1) du dispositif d'entraînement à actionneur à corps solide.

**3.** Dispositif d'entraînement à actionneur à corps solide selon la revendication 1 ou 2, dans lequel les au moins deux actionneurs à corps solide (11, 12) sont orientés sous un angle par rapport à leur sens d'action principal, notamment sous un angle d'environ 90°.

**4.** Dispositif d'entraînement à actionneur à corps solide selon la revendication 1 ou 2, dans lequel les au moins deux actionneurs à corps solide (11, 12) sont orientés en parallèle l'un à l'autre au niveau de leur sens d'action principal.

**5.** Dispositif d'entraînement à actionneur à corps solide selon la revendication 3 ou 4, dans lequel les au moins deux actionneurs à corps solide (11, 12) sont orientés par rapport à leur sens d'action dans un plan à la transversale, notamment à la perpendiculaire de l'axe (X) de l'arbre (2).

**6.** Dispositif d'entraînement à actionneur à corps solide selon l'une quelconque des revendications précédentes, dans lequel la charge mécanique est un couple de rotation (MW) agissant sur l'arbre.

**7.** Dispositif d'entraînement à actionneur à corps solide selon l'une quelconque des revendications précédentes, dans lequel une charge (F) agissante de tels actionneurs à corps solide (11, 12) est déterminée en fonction d'un couple de rotation (Mw) agissant sur l'arbre (2) et d'une position (d) mutuelle des actionneurs à corps solide (11, 12), notamment selon

$$F = \frac{M_w}{2} \cdot \frac{1}{2d},$$

des forces agissantes (F11, F12) de tels actionneurs à corps solides (11, 12) formant une paire de forces avec un écart (2d) qui résultent dans le couple de rotation (MW).

**8.** Dispositif d'entraînement à actionneur à corps solide selon l'une quelconque des revendications précédentes, dans lequel un agencement de circuit de détecteur spécifique (611 - 614) est directement associé aux actionneurs à corps solide (11, 14).

**9.** Dispositif d'entraînement à actionneur à corps solide selon l'une quelconque des revendications précédentes, lequel est conçu sous la forme d'un dispositif annulaire d'entraînement d'actionneur à corps solide (0, 0*).

**10.** Dispositif d'entraînement à actionneur à corps solide selon l'une quelconque des revendications précédentes, dans lequel le dispositif de contrôle (6) ou l'agencement de circuit de détecteur est conçu et installé pour détecter et pour mettre à disposition le signal, même si le dispositif d'entraînement d'actionneur à corps solide (0, 0*) est inactif par ailleurs.

**11.** Procédé d'exploitation du dispositif d'entraînement à actionneur à corps solide avec un dispositif de contrôle selon l'une quelconque des revendications précédentes, lors duquel

- au moyen du dispositif de contrôle, on applique des charges et/ou des tensions sur les actionneurs à corps solide (11 - 14) et
- à l'aide d'un agencement de circuit de détecteur, on détecte une charge mécanique et/ou une température agissant sur au moins l'un des actionneurs à corps solide (11 - 14) à effet de capteur, **caractérisé en ce que** l'agencement de circuit de détecteur et/ou le dispositif de contrôle (6) détermine une différence de potentiel (ΔU) à partir de charges et/ou de tensions d'au moins deux des actionneurs à corps solide (11 - 14) qui sont détectées par l'agencement de circuit de détecteur et délivre un signal correspondant ou l'utilise pour le réglage du dispositif d'entraînement d'actionneur à corps solide.

**12.** Procédé selon la revendication 11, lors duquel l'agencement de circuit de détecteur et/ou le dispositif de contrôle (6) détecte la charge mécanique et/ou la température agissante même si le dispositif d'entraînement d'actionneur à corps solide (0, 0*) est inactif par ailleurs.

**FIG 1**

**FIG 2**

## FIG 3

$F_{11}$ → [ 11 ] $k = \dfrac{Q}{F}$ → $Q_1$ → [ 64-1 ] $p = \dfrac{U}{Q}$ → $U_1$

$F_{12}$ → [ 12 ] $k = \dfrac{Q}{F}$ → $Q_2$ → [ 64-2 ] $p = \dfrac{U}{Q}$ → $U_2$

65 → $\bigoplus$ → $\Delta U$

## FIG 4

69

$U1(t)$ — 11 — 66-1 — 67-1 — Ladung 11

M 68

67-3 → $\Delta U$

$U2(t)$ — 12 — 66-2 — 67-2 — Ladung 12

## FIG 5

## FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1098429 A2

- EP 1319859 A1